# EUROPÄISCHE PATENTSCHRIFT

(11) **EP 1 398 637 B1**
(45) Veröffentlichungstag und Bekanntmachung des Hinweises auf die Patenterteilung: **17.05.2006**
(21) Anmeldenummer: 03020756.7
(22) Anmeldetag: 12.09.2003
(51) Int. Cl.: G01P 5/07, F16J 15/447

(54) **Rotationsanemometer**
Rotational anemometer
Anémomètre à rotation

(30) Priorität: 14.09.2002 DE 10242679
(43) Veröffentlichungstag der Anmeldung: 17.03.2004
(73) Patentinhaber: Adolf Thies GmbH & Co KG, 37083 Göttingen (DE)
(72) Erfinder: Schmoling, Lothar, 37130 Gleichen (DE); Straten, Günther, 38173 Sickte (DE)
(74) Vertreter: Rehberg Hüppe + Partner

(56) Entgegenhaltungen:
- EP-A- 0 750 198
- EP-A- 0 813 066
- DE-U- 7 201 831

## Beschreibung

Die Erfindung betrifft ein Rotationsanemometer mit einem Sockel, mit einem an dem Sockel frei verdrehbar gelagerten Schalenstern und mit den Merkmalen des Oberbegriffs des Patentanspruchs 1.

### STAND DER TECHNIK

Bei Rotationsanemometer zur Messung der Geschwindigkeit von Fluidströmungen, insbesondere von Luftströmungen, d. h. von Wind, die einen drehbar gelagerten Schalenstern aufweisen, ist es bekannt, ein Drehlager für den Schalenstern durch eine Dichtung zu schützen. Für die Leistungsfähigkeit eines Rotationsanemometers ist es wichtig, dass der Schalenstern besonders leichtgängig gelagert ist. Entsprechend muss ein Drehlager wirksam vor Verschmutzungen, die diese Leichtgängigkeit beeinträchtigen können, geschützt werden, wenn besonders wirtschaftliche, lange Wartungsintervalle für das Rotationsanemometer von Interesse sind. Bei solchen Wartungen, die in aller Regel den Austausch des Drehlagers für den Schalenstern umfassen, müssen die beiden drehbar gegeneinander gelagerten Bauteile getrennt und anschließend wieder zusammengefügt werden.

Gleichzeitig ist eine schlanke Anordnung der Drehlagerung für den Schalenstern bei einem Rotationsanemometer von großem Interesse, um Fluidströmungen, deren Geschwindigkeit bestimmt werden soll, möglichst wenig durch den ruhenden Aufbau des Anemometers zu stören. Gewisse Störungen der interessierenden Strömung durch das Rotationsanemometer sind grundsätzlich nicht zu vermeiden. Sie können aber durch einen besonders schlanken Aufbau minimiert werden. Wenn ein Rotationsanemometer mit dem drehbar gelagerten Schalenstern endet, ist jedoch ein asymmetrischer Aufbau zur Ebene des Schalensterns gegeben, der dazu führt, dass Strömungsgeschwindigkeit von Strömungen, die von oberhalb und unterhalb der Ebene des Schalensterns auf das Rotationsanemometer treffen, unterschiedlich gemessen werden, d.h. zu unterschiedlichen Rotationsgeschwindigkeiten des Schalensterns führen.

Bei einem aus der EP-A-0 813 066 bekannten Rotationsanemometer mit den Merkmalen des Oberbegriffs des Patentanspruchs 1 ist das Drehlager für den Schalenstern durch eine Labyrinthdichtung geschützt. Aus den vorstehend genannten Randbedingungen ist aber auf die Ausbildung einer idealen Labyrinthdichtung verzichtet. Statt dessen sind die Labyrinthwände an den beiden Bauteilen nur so hoch, dass gerade noch ein axiales Zusammenfügen ohne Deformation der Labyrinthwände möglich ist. Auf ein ineinander Eingreifen der Labyrinthwände wird also verzichtet, wodurch die Leistungsfähigkeit der Labyrinthdichtung der bekannten Anordnung begrenzt ist.

Aus der DE 7201831 U ist eine aus zwei konzentrischen Ringteilen bestehende nicht schleifende Dichtung mit Labyrinthwirkung bekannt. Dabei weist das mit Spritzscheibe versehene Ringteil Stützscheiben auf, zwischen denen sich mindestens eine aus elastischem Material bestehende Spritzscheibe befindet. Die Dichtwirkung der bekannten Dichtung wird durch die Beaufschlagung eines schmalen Spalts zwischen den konzentrischen Ringteilen mit Öl erreicht. Die Spritzscheibe dient zum Abspritzen des durch den Spalt hindurch getretenen Öls, das anschließend über einen Ablaufkanal zurückgefördert wird. Die Ausbildung der Spritzscheibe aus elastischem Material erlaubt es bei der Montage der nicht schleifenden Dichtung das innere und das äußere Ringteil ineinander zu schieben, wobei die elastische Spitzscheibe kurzzeitig verformt wird und dann wieder ihre ursprüngliche Gestalt annimmt.

### AUFGABE DER ERFINDUNG

Der Erfindung liegt die Aufgabe zugrunde, eine Anordnung mit den Merkmalen des Oberbegriffs des Patentanspruchs 1 aufzuzeigen, bei der eine verbesserte Wirkung der Labyrinthdichtung gegeben ist. Weiterhin soll ein Rotationsanemometer mit einer solchen Anordnung aufgezeigt werden, das auch bei langen Wartungsintervallen zuverlässig funktionsfähig ist.

### LÖSUNG

Die Aufgabe der Erfindung wird erfindungsgemäß durch ein Rotationsanemometer mit den Merkmalen des Patentanspruchs 1 gelöst.

Vorteilhafte Ausführungsformen des neuen Rotationsanemometers sind in den abhängigen Ansprüchen 2 bis 10 beschrieben.

### BESCHREIBUNG DER ERFINDUNG

Das neue Rotationsanemometer weist eine vollwertige Labyrinthdichtung auf, ohne dass die Ineinanderfügbarkeit und Trennbarkeit der Bauteile im Bereich der Labyrinthdichtung mit zylindermantelförmiger Dichtfläche verloren geht. Dies wird dadurch erreicht, dass mindestens eine Labyrinthwand an dem einen Bauteil in radialer Dichtung zu der Drehachse zwischen die zwei Labyrinthwände an dem anderen Bauteil eingreift, wobei die Ineinanderfügbarkeit und Trennbarkeit der beiden Bauteile dadurch realisiert ist, dass jede dieser Labyrinthwände aus elastisch verformbarem Material ausgebildet ist. Beim Ineinanderfügen und Trennen der beiden Bauteile werden die entsprechenden Labyrinthwände an dem einen Bauteil vorübergehend elastisch verformt. Insbesondere nach dem Ineinanderfügen der Bauteile nehmen sie aber ihre ursprüngliche Ausrichtung wieder ein, wobei sie zwischen die Labyrinthwände an dem anderen Bauteil eingreifen und die vollwertige Labyrinthdichtung ausbilden. Die bei einer üblichen vollwertigen Labyrinthdichtung vorhandenen Freiräume zwischen den beiden Bauteilen sind auch bei der neuen Anordnung ausreichend, um Toleranzen bei den Abmessungen und Ausrichtungen der Labyrinthwände aus elastisch verformbarem Material aufzunehmen. In überraschender Weise können also alle Nachteile des Stands der Technik mit relativ geringem Aufwand beseitigt werden. Das neue Rotationsanemometer kann zudem einen besonders schlanken Aufbau im Bereich seiner ortsfesten Bestandteile, d.h. seines Sockels aufweisen.

Bei dem neuen Rotationsanemometer ist es bevorzugt, wenn mehrere Labyrinthwände an dem einen Bauteil in radialer Richtung zu der Drehachse zwischen Labyrinthwände an dem anderen Bauteil eingreifen und aus elastisch verformbarem Material ausgebildet sind. Die Leistungsfähigkeit einer Labyrinthdichtung wächst mit der Anzahl der ineinander eingreifenden Labyrinthwände an. Ein gutes Ergebnis wird beispielsweise mit drei Labyrinthwänden an dem einen Bauteil erreicht, die zwischen vier oder zumindest hinter drei Labyrinthwände an dem anderen Bauteil eingreifen.

In einer besonders bevorzugten Ausführungsform des neuen Rotationsanemometers sind die Labyrinthwände aus verformbarem Material an dem einen Bauteil Bestandteile eines einstückigen Dichtungsformkörpers. Der Dichtungsformkörper kann neben seiner Funktion innerhalb der Labyrinthdichtung auch andere Dichtfunktionen an dem einen Bauteil haben.

Der Dichtungsformkörper kann austauschbar sein. Insbesondere kann der Dichtungskörper als Einmalteil ausgebildet sein, das bei jedem Warten der Anordnung ersetzt wird. Auf diese Weise entfällt erheblicher Reinigungsaufwand im Bereich der Labyrinthdichtung, weil Verunreinigungen an den Labyrinthwänden an dem einen Bauteil mit dem Austauschen des Dichtungsformkörpers automatisch beseitigt werden.

Das Bauteil mit der mindestens einen Labyrinthwand aus elastisch verformbarem Material im Bereich der Labyrinthrichtung kann radial innen in der neuen Anordnung liegen. Das elastisch verformbare Material wird so durch das andere Bauteil geschützt.

Grundsätzlich können natürlich auch die Labyrinthwände an dem anderen Bauteil aus elastisch verformbarem Material ausgebildet sein, beispielsweise als Bestandteile eines zweiten Dichtungsformkörpers. Bevorzugt ist es aber, wenn die Labyrinthwände des anderen Bauteils Bestandteile eines durchgehenden Formkörpers aus formsteifen Material sind.

Um bei dem neuen Rotationsanemometer einen asymmetrischen Aufbau zur Ebene des Schalensterns zu kompensieren, können die Schalen des Schalensterns kegelmantelförmig sein, wobei die Kegelachsen der Schalen aus der Ebene des Schalensterns heraus geneigt sind. Konkret können die Öffnungen der Schalen leicht nach oben gerichtet sein, um einen nur im unteren Bereich des Rotationsanemometers vorhandenen Schaft zu kompensieren. Für diese Kompensation sind kegelmantelförmige Schalen besser als halbkugelförmige Schalen geeignet. Als besonders günstig erweist sich ein Öffnungswinkel der kegelmantelförmigen Schalen von etwa 90°. Eine geeignete Neigung der Kegelachsen aus der Ebene des Schalensterns beträgt mehrere zehntel Grad bis einige wenige Grad.

Bei dem neuen Rotationsanemometer sind die Stiele der Schalen vorzugsweise durch Formschluss an einer Nabe des Schalensterns befestigt und bezüglich ihrer Orientierung gesichert. Dabei werden sie vorzugsweise zwischen zwei in Richtung der Drehachse gegeneinander beaufschlagte Nabenteile des Schalensterns gehalten. Wenn das eine Nabenteil im Inneren des anderen Nabenteils angeordnet ist und das andere Nabenteil Durchbrechungen in einer ansonsten geschlossenen Umfangsoberfläche für die Stiele der Schalen aufweist sowie das andere Bauteil bei der Labyrinthdichtung bildet, wird ein besonders kompakter geschlossener Aufbau erreicht.

### KURZBESCHREIBUNG DER FIGUREN

Im Folgenden wird die Erfindung anhand eines in den Figuren dargestellten bevorzugten Ausführungsbeispiels weiter erläutert und beschrieben.
- **Fig. 1**: zeigt einen vertikalen Längsschnitt durch ein Rotationsanemometer mit der neuen Anordnung.
- **Fig. 2**: zeigt die neue Anordnung des Rotationsanemometers gemäß Fig. 1 in einer vergrößerten Darstellung.
- **Fig. 3**: zeigt die Neigung einer Schale des Rotationsanemometers gemäß Fig. 1 zur Ebene seines Schalensterns.
- **Fig. 4**: zeigt die Schräganströmungskennlinie des Rotationsanemometers gemäß Fig. 1 mit den geneigten Schalen gemäß Fig. 3 im Vergleich zu der Schräganströmungskennlinie bei Schalen ohne Neigung.

### FIGURENBESCHREIBUNG

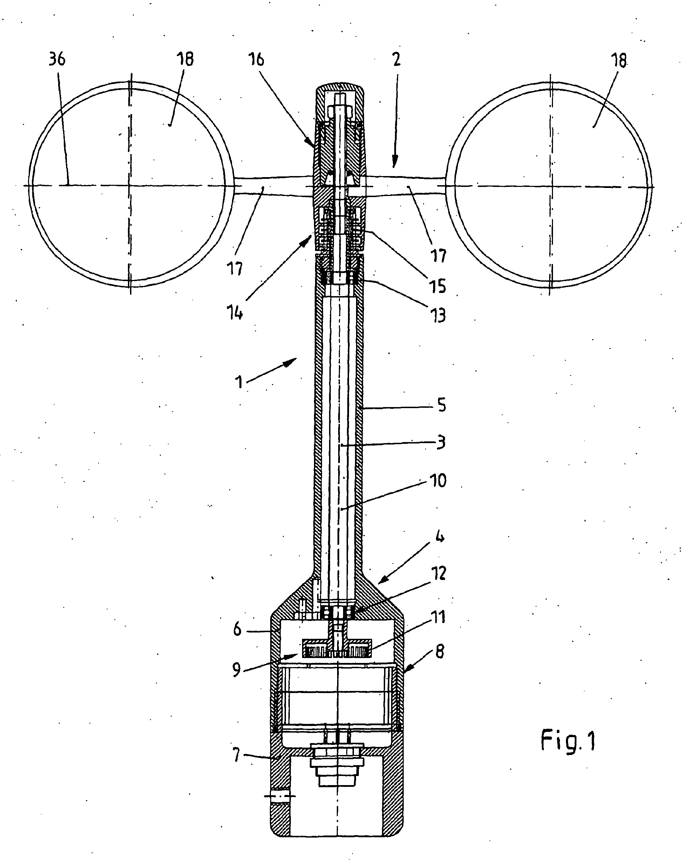

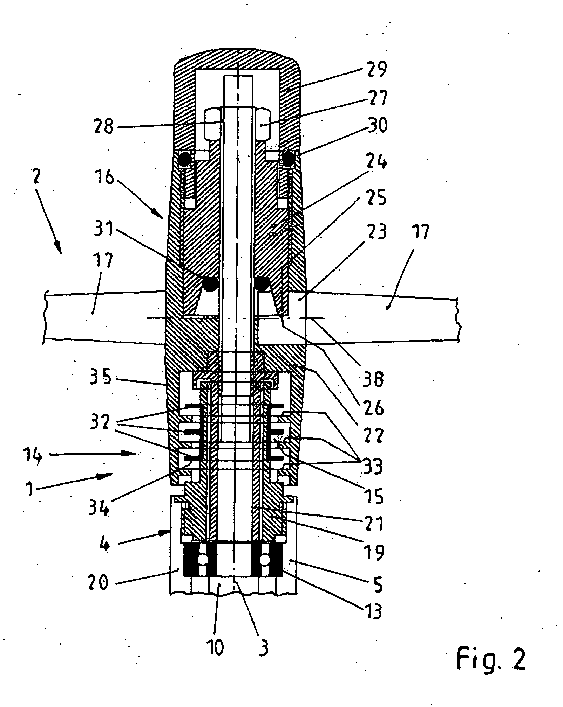

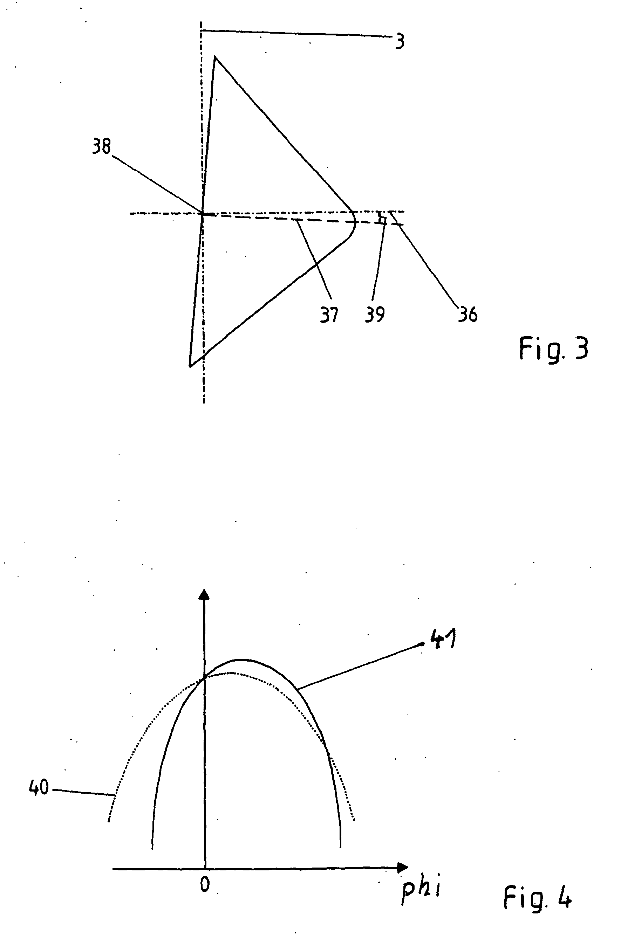

Das in **Fig. 1** dargestellte Rotationsanemometer 1 weist einen Schalenstern 2 auf, der um eine vertikale Drehachse 3 frei verdrehbar an einem Sockel 4 gelagert ist. Der Sockel 4 weist einen schlanken Schaft 5 auf, über dessen oberen Ende der Schalenstern 2 angeordnet ist und der im unteren Bereich einstückig in ein Gehäuseteil 6 übergeht. Das Gehäuseteil 6 bildet zusammen mit einem weiteren Gehäuseteil 7 ein Gehäuse 8 für eine Messanordnung 9 des Rotationsanemometers 1 aus. Von dem Schalenstern 2 ragt eine Welle 10 durch den Schaft 5 in das Gehäuse 8 herein, an deren freien unteren Ende ein Winkelimpulsrad 11 drehfest angeordnet ist. An dem oberen Ende der Welle 10 ist der Schalenstern 2 drehfest befestigt. Für die Welle 10 sind zwei Drehlager 12 und 13 an dem Sockel 4 vorgesehen. Das Drehlager 12 ist im Übergangsbereich zwischen dem Schaft 5 und dem Gehäuseteil 6 vorgesehen. Das Drehlager 13 befindet sich an dem oberen Ende des Schafts 5. Um insbesondere das Drehlager 13 vor Verschmutzungen zu schützen, ist eine Anordnung 14 mit einer Labyrinthdichtung 15 zwischen dem oberen Ende des Schafts 5 und einer Nabe 16 des Schalensterns 2, die an der Welle 3 drehfest befestigt ist, vorgesehen. Die Details der Anordnung 14 werden im Zusammenhang mit Fig. 2 näher erläutert werden. Von dem Nabenteil 16 verlaufen Stiele 17 zu Schalen 18 des Schalensterns 2. Typischerweise weist der Schalenstern 2 drei Schalen 18 auf, so dass nur die in Fig. 1 rechte Schale 18 in ihrer tatsächlichen Relativlage zu dem Sockel 4 wiedergegeben ist, während sich die dort links wiedergegebene Schale 18 in einer geneigten Orientierung zu der Zeichenebene befindet. Die Form der Schalen 18 wird im Zusammenhang mit Fig. 3 noch näher erläutert werden.

**Fig. 2** zeigt die Details der Lagerung des Schalensterns 2 am oberen Ende des Sockels 4 bzw. des Schafts 5. Ein Abschlussteil 19 ist oberhalb des Drehlagers13 für die Welle 10 dichtend in einen Rohrkörper 20 des Schafts 5 eingeschraubt. Die Welle 10 erstreckt sich durch das Abschlussteil 19 hindurch und oberhalb des Drehlagers 13 ist ein Anschlussteil 21 drehfest mit der Welle verbunden. Das Anschlussteil 21 stützt ein Nabenteil 22 gegenüber der Welle 10 ab. In dem Nabenteil 22 sind Durchbrechungen 23 für die Enden der Stiele 17 vorgesehen. D.h., die Stiele 17 greifen durch die Durchbrechungen 23 in das Nabenteil 22 ein. Dort werden sie formschlüssig von einem zweiten Nabenteil 24 gehalten, wobei ein Randbereich 25 des Nabenteils 24 in eine entsprechend geformte Ausnehmung 26 in jedem Fuß jedes Stiels 17 eingreift. Jeder Stiel 17 ist so gegen einem Herausziehen aus dem Nabenteil 22 als auch gegenüber einem Verdrehen gegenüber dem Nabenteil 22 durch Formschluss gesichert. Das Nabenteil 24 liegt im Inneren des Nabenteils 22 und wird diesem gegenüber durch eine Mutter 27 welche auf ein Außengewinde 28 am oberen Ende der Welle 10 aufgeschraubt ist, beaufschlagt. Die Mutter 27 und das obere Ende der Welle 10 werden durch eine Kappe 29 abgedeckt, die durch eine Ringdichtung 30 gegenüber dem Nabenteil 22 abgedichtet ist. Eine weitere Ringdichtung 31 ist zwischen dem inneren Nabenteil 24 und den inneren Enden der Stiele 17 vorgesehen. Der Dichtring 31 dient dabei weniger als Abdichtungsmittel denn als Hilfsmittel bei der Fixierung der Stiele 17. Durch Lösen der Mutter 27 nach Abnehmen der Kappe 29 kann die Nabe 16 aus den Nabenteilen 22 und 24 zusammen mit den Stielen 17 von der Welle 10 und dem Anschlussteil 21 abgenommen werden. Dies ist möglich, obwohl die Labyrinthdichtung 15 zwischen dem Nabenteil 22 und dem Abschlussteil 19 des Schafts 5 vorgesehen ist, bei der Labyrinthwände 32 an dem Abschlussteil 19, die um die Drehachse 3 umlaufen und in radialer Richtung zu der Drehachse 3 von dem Abschlussteil 19 abstehen, zwischen Labyrinthwände 33 an dem Nabenteil 22, die dort um die Drehachse 3 umlaufend radial nach innen vorspringen, eingreifen. Grundlage hierfür ist, dass die Labyrinthwände 32 an einem Dichtungsformkörper 34 aus elastischem Material vorgesehen sind, der beim Zusammenfügen des Abschlussteils 19 und des Nabenteils 22 temporär deformiert wird aber nach dem Zusammenfügen die Labyrinthwände 32 in der gewünschten Relativanordnung zu den Labyrinthwänden 33 aufweist. Auf dieselbe Weise ist das Trennen dieser beiden Bauteile möglich. Bei einer Verschmutzung oder auch einer Alterung des Dichtungsformkörpers 32 kann dieser leicht gegen einen neuen Dichtungsformkörper 32 ausgetauscht werden. Dies ist weniger aufwändig als seine Reinigung oder anderweitige Aufarbeitung. Das Nabenteil 22 ist bis auf die Durchbrechungen 23 für die Stiele 17 mit einer umlaufend geschlossenen Umfangsoberfläche 35 versehen, die das Eintreten von Verunreinigungen verhindert. Die Labyrinthdichtung 15 stellt sicher, dass keine Verunreinigungen zwischen den Bauteilen 19 und 22, d.h. zwischen die gegeneinander verdrehbaren Bauteile eindringen und bis zu dem Drehlager 13 gelangen können. Die Dichtfläche der Labyrinthdichtung 15 verläuft zylindermantelförmig um die Drehachse 3, wodurch trotz relativer Größe der Dichtfläche zwecks Erreichung einer guten Abdichtung kleine radiale Abmessungen des Schafts 5 und der Nabe 16 relativ zu der Drehachse 3 erreicht werden. Hierdurch wird eine möglichst geringe Störung der Strömung verursacht, deren aktuelle Geschwindigkeit mit dem Rotationsanemometer 1 gemessen werden soll.

Die Asymmetrie, die sich dadurch ergibt, dass der Schaft 5 nur auf einer Seite an die Nabe 16 angrenzt, wird bei dem Rotationsanemometer gemäß Fig. 1 dadurch kompensiert, dass die Schalen 18 wie in **Fig. 3** wiedergegeben ausgerichtet sind. Fig. 3 zeigt eine Schale 18 in der Seitenansicht relativ zu der Drehachse 3 und einer Ebene 36 des Schalensterns 2 gemäß Fig. 1. In der Ebene 36 rotieren die Stiele 17 gemäß Fig. 1. Die Schalen 18 sind kegelmantelförmig mit einem Öffnungswinkel von 90°. Ihre Kegelachse 37 ist aus der Ebene 36 um die Stielachse 38 des jeweiligen Stiels um einen Winkel 39 verkippt. Der Winkel 39 beträgt 3° und ist hier nicht maßstabsgetreu, sondern vergrößert wiedergegeben.

Durch die Neigung der Kegelachsen 37 der Schalen 18 gegenüber der Ebene 36 wird bei einer Schräganströmung des Rotationsanemometers 1 gemäß Fig. 1 eine Kompensation der Asymmetrie des Aufbaus des Rotationsanemometers 1 zu der Ebene 36 erreicht. In **Fig. 4** ist über dem Winkel phi zwischen der Anströmrichtung und der Ebene 36 der Messwert der Strömungsgeschwindigkeit aufgetragen, der sich bei dem Rotationsanemometer 1 ergibt. Eine Schräganströmungskennlinie 41 entspricht dem Vergleichsfall ohne Neigung der Kegelachsen 37 zu der Ebene 36. Aufgrund der Asymmetrie der Gesamtanordnung ist die Schräganströmungskennlinie 40 zu positiven Werten von phi, die einer Anströmung schräg von oben entsprechen, versetzt. Durch die Neigung der Schalen 18 gemäß Fig. 3 wird jedoch eine Schräganströmungskennlinie 41 erreicht, die deutlich symmetrischer ist und nahezu einer Funktion cos phi entspricht. Diese Entsprechung ist deshalb erwünscht, weil sie einer typischen Schräganströmungskennlinie von Windkraftanlagen entspricht. So ist das hier beschriebene Rotationsanemometer 1 besonders gut zum Auswerten von möglichen Standorten für Windkraftanlagen geeignet.

### BEZUGSZEICHENLISTE

- 1: Rotationsanemometer
- 2: Schalenstern
- 3: Drehachse
- 4: Sockel
- 5: Schaft
- 6: Gehäuseteil
- 7: Gehäuseteil
- 8: Gehäuse
- 9: Messanordnung
- 10: Welle

- 11: Winkelimpulsrad
- 12: Drehlager
- 13: Drehlager
- 14: Anordnung
- 15: Labyrinthdichtung
- 16: Nabe
- 17: Stiel
- 18: Schale
- 19: Abschlussteil
- 20: Rohrkörper

- 21: Anschlussstück
- 22: Nabenteil
- 23: Durchbrechung
- 24: Nabenteil
- 25: Randbereich
- 26: Ausnehmung
- 27: Mutter
- 28: Außengewinde
- 29: Kappe
- 30: Dichtring

- 31: Dichtring
- 32: Labyrinthwand
- 33: Labyrinthwand
- 34: Dichtungsformkörper
- 35: Umfangsoberfläche
- 36: Ebene
- 37: Kegelachse
- 38: Stielachse
- 39: Winkel
- 40: Schräganströmungskennlinie
- 41: Schräganströmungskennlinie

## Patentansprüche

1. Rotationsanemometer mit einem an einem Sockel (4) um eine Drehachse (3) frei verdrehbar gelagerten Schalensterns (2) und mit einer Labyrinthdichtung (15) zwischen einem Bauteil des Sockels und einem Bauteil des Schalensterns, wobei die Labyrinthdichtung in einem Bereich vorgesehen ist, in dem die beiden Bauteile in Richtung der Drehachse überlappen, und an beiden Bauteilen Labyrinthwände (32, 33) aufweist, die ringförmig um die Drehachse herum verlaufen und in radialer Richtung zu der Drehachse von den beiden Bauteilen nach innen bzw. außen abstehen, wobei in axialer Richtung der Drehachse mindestens eine Labyrinthwand an dem einen Bauteil an einer axialen Position zwischen den axialen Positionen von zwei Labyrinthwänden an dem anderen Bauteil angeordnet ist und wobei die beiden Bauteile ohne Demontage der Labyrinthwände im Bereich der Labyrinthdichtung in Richtung der Drehachse ineinander fügbar und trennbar sind, **dadurch gekennzeichnet, dass** zumindest die mindestens eine Labyrinthwand (32) an dem einen Bauteil (19) in radialer Richtung zu der Drehachse (3) zwischen die zwei Labyrinthwände (33) an dem anderen Bauteil (22) eingreift und aus elastisch verformbarem Material ausgebildet ist.

2. Rotationsanemometer nach Anspruch 1, **dadurch gekennzeichnet, dass** mehrere Labyrinthwände (32) an dem einem Bauteile (19) in radialer Richtung zu der Drehachse (3) zwischen Labyrinthwände (33) an dem anderen Bauteil (22) eingreifen und aus elastisch verformbarem Material ausgebildet sind.

3. Rotationsanemometer nach einem der Ansprüche 1 bis 2, **dadurch gekennzeichnet, dass** die Labyrinthwände (32) aus verformbarem Material an dem einen Bauteil (19) Bestandteile eines einstückigen Dichtungsformkörpers (34) sind.

4. Rotationsanemometer nach Anspruch 3, **dadurch gekennzeichnet, dass** der Dichtungsformkörper (34) austauschbar vorgesehen ist.

5. Rotationsanemometer nach einem der Ansprüche 1 bis 4, **dadurch gekennzeichnet, dass** das Bauteil (19) mit der mindestens einen Labyrinthwand (32) aus elastisch verformbarem Material im Bereich der Labyrinthdichtung (15) radial innen liegt.

6. Rotationsanemometer nach einem der Ansprüche 1 bis 5, **dadurch gekennzeichnet, dass** die Labyrinthwände (33) des anderen Bauteils (22) Bestandteile eines durchgehenden Formkörpers aus formsteifem Material sind.

7. Rotationsanemometer nach einem der Ansprüche 1 bis 6, **dadurch gekennzeichnet, dass** die Labyrinthwände (33) des anderen Bauteils (22) Bestandteile eines austauschbaren Formkörpers (22) sind.

8. Rotationsanemometer nach einem der Ansprüche 1 bis 7, **dadurch gekennzeichnet, dass** die Schalen (18) des Schalensterns (2) kegelmantelförmig sind und dass die Kegelachsen (37) der Schalen (18) aus der Ebene (36) des Schalensterns (2) heraus geneigt sind.

9. Rotationsanemometer nach einem der Ansprüche 1 bis 8, **dadurch gekennzeichnet, dass** der Öffnungswinkel der kegelmantelförmigen Schalen (18) 90° +/- 5° beträgt und das die Neigung der Kegelachsen (37) aus der Ebene (36) des Schalensterns (2) 0,5 bis 5° beträgt..

10. Rotationsanemometer nach einem der Ansprüche 1 bis 9, **dadurch gekennzeichnet, dass** Stiele (17) der Schalen (18) formschlüssig zwischen zwei in Richtung der Drehachse (3) gegeneinander beaufschlagten Nabenteilen (22, 24) des Schalensterns (18) gehalten werden, wobei das eine Nabenteil (24) im Inneren des anderen Nabenteils (22) angeordnet ist und dass das andere Nabenteil (22) Durchbrechungen (23) in einer ansonsten geschlossenen Umfangsoberfläche (35) für die Stiele (17) der Schalen (18) aufweist sowie das andere Bauteil bei der Labyrinthdichtung (15) bildet.

## Claims

1. Rotational anemometer comprising a star of cups (2) which is supported at a base (4) freely rotating about a rotating axis (3), and a labyrinth seal (15) between a part of the base and a part of the star of cups, the labyrinth seal being provided in an area in which the two parts overlap in the direction of the rotating axis and having labyrinth walls (32, 33) on both parts, which extend about the rotating axis like rings and which protrude in a radial direction with regard to the rotational axis from the two parts inwardly and outwardly, respectively, at least one labyrinth wall at the one part being arranged in an axial position between the axial positions of two labyrinth walls at the other part in the axial direction of the rotating axis, and both parts being provided for being fitted into each other and for being separated within the area of the labyrinth seal in the direction of the rotating axis without disassembling the labyrinth walls, **characterized in that** at least one labyrinth seal (32) at the one part (19) protrudes in a radial direction with regard to the rotating axis (3) in-between the two labyrinth walls (33) at the other part (22) and is made of an elastically deformable material.

2. Rotational anemometer according to claim 1, **characterized in that** a plurality of labyrinth walls (32) at the one part (19) protrudes in-between labyrinth walls (33) at the other part (22) in a radial direction with regard to the rotational axis (3) and is made of elastically deformable material.

3. Rotational anemometer according to any of the claims 1 to 2, **characterized in that** the labyrinth walls (32) of deformable material at the one part (19) are constituents of a one part shaped seal body (34).

4. Rotational anemometer according to claim 3, **characterized in that** the shaped seal body (34) is exchangeable.

5. Rotational anemometer according to any of the claims 1 to 4, **characterized in that**, the part (19) having the at least one labyrinth wall (32) of elastically deformable material is located closer to the rotating axis in the area of the labyrinth seal (15).

6. Rotational anemometer according to any of the claims 1 to 5, **characterized in that** the labyrinth walls (33) of the other part (22) are constituents of a continuous shaped body of a material having a fixed shape.

7. Rotational anemometer according to any of the claims 1 to 6, **characterized in that** the labyrinth walls (33) of the other part (22) are constituents of an exchangeable shaped body (22).

8. Rotational anemometer according to any of the claims 1 to 7, **characterized in that** the cups (18) of the star of cups (2) are cone-shaped and that the cone axes (34) of the cups (18) are tilted out of the plane (36) of the star of cups (2).

9. Rotational anemometer according to any of the claims 1 to 8, **characterized in that** the opening angle of the cone-shaped cups (18) is 90° +/- 5° and that the inclination of the cone axes (37) out of the plane (36) of the star of cups (2) is 0,5 to 5°.

10. Rotational anemometer according to any of the claims 1 to 9, **characterized in that** the shafts (17) of the cups (18) are positively locked between hub parts (22, 24) of the star of cups (18) which are biased against each other in the direction of the rotational axis, the one hub part (24) being arranged in the interior of the other hub part (22), and that the other hub part (22) has openings (23) for the shafts (17) of the cups (18) in an otherwise closed peripheral surface (35) and forms the other part of the labyrinth seal (15).

## Revendications

1. Anémomètre rotatif comportant un moulinet à coupelles (2) monté sur un socle (4) de manière librement rotative autour d'un axe de rotation (3), et une garniture d'étanchéité en labyrinthe (15) disposée entre une partie du socle et une partie du moulinet à coupelles, la garniture d'étanchéité en labyrinthe étant prévue dans une zone dans laquelle les deux parties se chevauchent dans le sens de l'axe de rotation, la garniture présentant, sur les deux parties, des parois de labyrinthe (32, 33) s'étendant sous forme annulaire autour de l'axe de rotation et faisant saillie des deux parties vers l'intérieur respectivement vers l'extérieur dans le sens radial par rapport à l'axe de rotation, au moins une paroi de labyrinthe étant agencée dans le sens axial de l'axe de rotation sur l'une des parties dans une position axiale entre les positions axiales de deux parois de labyrinthe sur l'autre partie et les deux parties pouvant, sans démontage des parois de labyrinthe dans la zone de la garniture d'étanchéité en labyrinthe, être emboîtées l'une dans l'autre et séparées l'une de l'autre dans le sens de l'axe de rotation, **caractérisé en ce qu'**au moins ladite au moins une paroi de labyrinthe (32) sur l'une (19) des parties s'engage dans le sens radial par rapport à l'axe de rotation (3) entre les deux parois de labyrinthe (33) sur l'autre partie (22) et est réalisée en un matériau élastiquement déformable.

2. Anémomètre rotatif selon la revendication 1, **caractérisé en ce que** plusieurs parois de labyrinthe (32) sur l'une (19) des parties s'engagent dans une direction radiale par rapport à l'axe de rotation (3), entre des parois de labyrinthe (33) de l'autre partie (22), et sont réalisées en un matériau élastiquement déformable.

3. Anémomètre rotatif selon la revendication 1 ou 2, **caractérisé en ce que** les parois de labyrinthe (32) en matériau déformable sur l'une (19) des parties font partie intégrante d'un corps d'étanchéité profilé (34) d'un seul tenant.

4. Anémomètre rotatif selon la revendication 3, **caractérisé en ce que** le corps d'étanchéité profilé (34) est un corps remplaçable.

5. Anémomètre rotatif selon l'une quelconque des revendications 1 à 4, **caractérisé en ce que** la partie (19) avec ladite au moins une paroi de labyrinthe (32) en matériau élastiquement déformable est située dans le sens radial vers l'intérieur dans la zone de la garniture d'étanchéité en labyrinthe (15).

6. Anémomètre rotatif selon l'une quelconque des revendications 1 à 5, **caractérisé en ce que** les parois de labyrinthe (33) de l'autre partie (22) font partie intégrante d'un corps profilé d'un seul tenant en matériau indéformable.

7. Anémomètre rotatif selon l'une quelconque des revendications 1 à 6, **caractérisé en ce que** les parois de labyrinthe (33) de l'autre partie (22) font partie intégrante d'un corps profilé (22) remplaçable.

8. Anémomètre rotatif selon l'une quelconque des revendications 1 à 7, **caractérisé en ce que** les coupelles (18) du moulinet (2) sont réalisées avec une surface latérale conique, et **en ce que** les axes du cône (37) des coupelles (18) sont inclinés hors du plan (36) du moulinet (2).

9. Anémomètre rotatif selon l'une quelconque des revendications 1 à 8, **caractérisé en ce que** l'angle d'ouverture des coupelles (18) à surface latérale conique correspond à 90° +/- 5° et l'inclinaison des axes du cône (37) hors du plan (36) du moulinet à coupelles (2) est de l'ordre de 0,5 à 5°.

10. Anémomètre rotatif selon l'une quelconque des revendications 1 à 9, **caractérisé en ce que** des tiges (17) des coupelles (18) sont maintenues par complémentarité de formes entre deux parties de moyeu (22, 24) du moulinet à coupelles (18) sollicitées l'une contre l'autre dans le sens de l'axe de rotation (3), l'une (24) des parties de moyeu étant agencée à l'intérieur de l'autre partie de moyeu (22), et **en ce que** l'autre partie de moyeu (22) comporte des passages (23) pour les tiges (17) des coupelles (18) ménagés dans une surface périphérique (35) fermée pour le reste, et forme l'autre partie près de la garniture d'étanchéité en labyrinthe (15).
